# EUROPEAN PATENT APPLICATION

(11) **EP 4 525 136 A1**
(43) Date of publication of application: **19.03.2025**
(21) Application number: 23939894.4
(22) Date of filing: 11.12.2023
(51) Int. Cl.: H01M 10/54, C22B 1/00, C22B 3/08, C22B 3/42, C22B 26/12

(54) **TREATMENT METHOD OF WASTE BATTERY**

(30) Priority: 31.05.2023 KR 20230070401; 16.08.2023 KR 20230107115
(71) Applicant: Korea Zinc Co., Ltd., Seoul 03159 (KR); Kemco, Seoul 03159 (KR)
(72) Inventor: KIM, Seung Hyun, Ulsan 44536 (KR); CHOI, Heon Sik, Ulsan 44696 (KR); LEE, Je Joong, Seoul 06041 (KR)
(74) Representative: Angerhausen, Christoph
(86) International application number: PCT/KR2023/020320
(87) International publication number: WO 2024/248255

(57) **Abstract**

A waste battery processing method includes a discharging process of discharging a waste battery, a dismantling process of dismantling the discharged waste battery into battery cell units, a shredding process of shredding the dismantled waste battery, a roasting process of roasting the shredded waste battery, a pulverizing process of pulverizing the fired waste battery, and a hydrometallurgical process of extracting and recovering metals from the pulverized waste battery.

## Description

### TECHNICAL FIELD

The present disclosure relates to a waste battery processing method, and more specifically, to a method of recovering metal in the form of a compound from a pack-type battery that has reached the end of its life.

### BACKGROUND

Recently, the demand for secondary batteries is increasing due to the expansion of the electric vehicle (Battery Electric Vehicle or BEV) market. Secondary batteries cannot be used permanently and have a specific expiration date. Secondary batteries that have reached the end of their life may be discarded, reused, or recycled. In recent years, research has been continuously conducted to recover rare metals, which are useful resources in batteries, through recycling of secondary batteries.

In the related art, techniques for mainly processing waste batteries in the form of small batteries, have been developed. Therefore, element techniques have been developed rather than integrated process techniques. However, since most of the recently increasing demand for batteries is focused on medium to large-sized batteries in pack units used as a power source for electric vehicles, waste battery processing techniques targeting medium to large-sized batteries are required. In addition, instead of the development for existing element techniques, the development of integrated recycling techniques for complete batteries and final target metal compounds is required.

### SUMMARY

Various embodiments of the present disclosure provide a waste battery processing method capable of efficiently recovering metals in the form of compounds from a pack-type battery that has reached the end of its life, through a discharging process, a dismantling process, a shredding process, a roasting process, a pulverizing process, and a hydrometallurgical process.

A waste battery processing method according to one embodiment of the present disclosure includes: a discharging process of discharging a waste battery; a dismantling process of dismantling the discharged waste battery into battery cell units; a shredding process of shredding the dismantled waste battery; a roasting process of roasting the shredded wasted battery; a pulverizing process of pulverizing the fired waste battery; and a hydrometallurgical process of extracting and recovering metals from the pulverized waste battery.

The waste battery may be a pack-type battery that has reached the end of its life.

The waste battery may be discharged through the discharging process so that the voltage of the waste battery becomes 30 V or less.

The battery cell units may be shredded into a size of 20 cm or less through the shredding process.

A process of separating a black mass from the pulverized waste battery may be omitted.

The discharging process, the dismantling process, the shredding process, the roasting process, and the pulverizing process may be performed continuously by an automated facility.

The discharging process, the dismantling process, and the shredding process may be performed by an automated facility using a robot.

Metal compounds may be recovered through the hydrometallurgical process.

The metal compounds may include at least one selected from the group consisting of lithium hydroxide, lithium carbonate and lithium phosphate.

The metal compounds may include one type of sulfate containing one selected from the group consisting of nickel cobalt, and manganese.

The metal compounds may include a nickel-cobalt-manganese-based compound in a solution state.

According to the present disclosure in some embodiments, the time required to recover metals in the form of compounds from the waste battery can be shortened by dismantling a discharged waste battery into battery cell units and then performing a hydrometallurgical process, and the metal recovery rate can be increased by reducing the by-products produced during a process operation.

In particular, according to the present disclosure, metals are recovered through the hydrometallurgical process without going through a process of separating a black mass, immediately after pulverizing the battery cell units. Therefore, it is possible to minimize the loss rate of metal components present in the pack-type battery.

In addition, according to the present disclosure, it is possible to dramatically reduce the time required to recover metals in the form of compounds from the pack-type battery by automatically performing the discharging process, the dismantling process, the shredding process, the roasting process, and the pulverizing process excluding the hydrometallurgical process.

### BRIEF DESCRIPTION OF DRAWINGS

FIG. 1 is an overall process diagram of a waste battery processing method according to the present disclosure.
FIG. 2 is an overall process diagram showing the detailed processes of the waste battery processing method according to the present disclosure.

### DETAILED DESCRIPTION

The waste battery processing method according to the present disclosure includes a discharging process of discharging a waste battery, a dismantling process of dismantling the discharged waste battery into battery cell units, a shredding process of shredding the dismantled waste battery, a roasting process of roasting the shredded waste battery, a pulverizing process of pulverizing the fired waste battery, and a hydrometallurgical process of extracting and recovering metals from the pulverized waste battery.

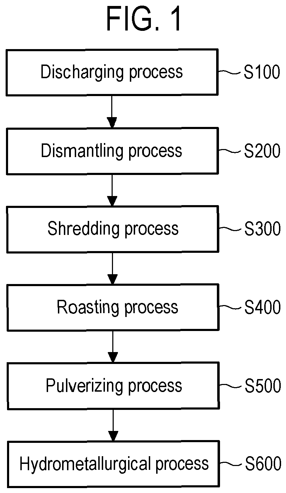

Hereinafter, the present disclosure will be described with reference to the drawings. FIG. 1 is an overall process diagram of the waste battery processing method according to the present disclosure. As shown in FIG. 1, the waste battery processing method according to an embodiment of the present disclosure includes a discharging process (S100), a dismantling process (S200), a shredding process (S300), a roasting process (S400), a pulverizing process (S500), and a hydrometallurgical process (S600).

### Discharging Process (S100)

The discharging process (S100) is a process of discharging the power accumulated in the waste battery to prevent explosion of the waste battery that may occur during the subsequent process. For example, in the discharging process (S100), the waste battery may be connected to a discharger and may be discharged so that the voltage of the waste battery is 30 V or less, preferably 0.2 V or less. By discharging the waste battery to the voltage falling within the above numerical range through the discharge process (S100), it is possible to prevent explosion of the waste battery in the subsequent dismantling process (S200), thereby ensuring stability.

The waste battery processing method according to the present disclosure may be performed on medium to large-sized batteries used in electric vehicles. In this case, the waste battery discharged through the discharging process (S100) may be a pack-type battery that has reached the end of its life.

The discharging process (S100) may be performed through mechanical discharging using a discharger, or saltwater discharging using saltwater. Preferably, the discharging process (S100) may be performed through the mechanical discharging. When using the mechanical discharging, it is possible to ensure safety against fire and explosion, check the discharging status, and reduce the discharging time and incidental costs.

### Dismantling Process (S200)

The dismantling process (S200) is a process of dismantling the waste battery in pack units into smaller units. In the dismantling process (S200) according to the present disclosure, the waste battery in the form of a pack is dismantled into battery cell units. For example, in the dismantling process (S200), the pack-type waste battery can be dismantled into battery module units and then into battery cell units.

Although it is convenient to directly use a pack-type waste battery for recycling, there is a problem in that the introduction of impurities increases because a BMS (Battery Management System) and various control devices are also introduced. Therefore, in order to recycle a waste battery, it needs to be dismantled at least into battery module units. The present disclosure is characterized by disassembling a pack-type waste battery into battery cell units rather than battery module units. According to the present disclosure, unlike a case of dismantling a pack-type waste battery into battery module units, a pack-type waste battery is dismantled into battery cell units, which makes it possible to significantly reduce the introduction of impurities (e.g., Al and Fe) in the recovered metals. In addition, since the amount of aluminum introduced into the recovered metals is quite small, there is an advantage in that an additional process for aluminum removal can be minimized when recovering the metals.

Meanwhile, if a pack-type waste battery is dismantled only into battery module units, a pyrometallurgical process (roasting process) is performed at a high temperature of at least 1200 °C. Therefore, manganese (Mn) is discharged as slag in the form of manganese oxide (MnO), making it difficult to recover manganese. Lithium is volatilized into a gaseous state, which may reduce the lithium recovery rate. On the other hand, when dismantling a pack-type waste battery into battery cell units as in the present disclosure, the temperature in the pyrometallurgical process can be set to be relatively low. Therefore, unlike the case where a pack-type waste battery is dismantled into battery module units, it is possible to recover manganese and significantly increase the lithium (Li) recovery rate.

According to one embodiment, as shown in FIG. 1, the dismantling process (S200) may be performed after the discharging process (S100). However, the present disclosure is not limited thereto. In another embodiment, unlike the case shown in FIG. 1, the dismantling process (S200) may be performed first, and then the discharging process (S100) may be performed.

### Shredding Process (S300)

The shredding process (S300) is a process of shredding the dismantled waste battery. The shredding process (S300) can shred the battery cell units into a size of 20 cm or less, specifically 15 cm or less, and more specifically 10 cm or less. By shredding the waste battery into a size within the above numerical range through the shredding process (S300), the shredded waste battery can be reduced and fired more uniformly in the roasting process (S400).

The shredding process (S300) may be carried out while spraying water under a nitrogen (N₂) atmosphere to prevent sparks and explosions. After the shredding progress, the sprayed water and the electrolyte flowing out from the waste battery may be removed. For example, the water and the electrolyte may be removed by centrifugation using a rotary barrel.

The shredding process (S300) may include a drying process (not shown) of drying the shredded waste battery.

According to the present disclosure, the discharging process (S100), the dismantling process (S200), and the shredding process (S300) may be performed by an automated facility using a robot, thereby significantly reducing the time required to recover metals from the waste battery.

### Roasting Process (S400)

The roasting process (S400) is a process of dry-processing the shredded waste battery. Specifically, the roasting process (S400) may be a process (IAR: Inert Atmospheric Roaster) of reducing and roasting the shredded waste battery in an inert gas atmosphere. For example, in the roasting process (S400), the waste battery shredded in to a size of 5 cm to 10 cm may be reduced and fired at a temperature of 800 °C to 900 °C in a nitrogen (N₂) atmosphere for 1 hour to 3 hours. By roasting the shredded waste battery in an inert gas atmosphere, lithium (Li) can be converted into water-soluble Li₂CO₃. In the process of reducing and roasting the shredded waste battery for pre-separation of lithium, some high oxides (Me₂O₃ where Me is Ni, Co or Mn) are reduced to low oxides (MeO where Me is Ni, Co or Mn), which may reduce the amount of auxiliary raw materials (H₂O₂, hydrogen peroxide) added during sulfuric acid leaching.

### Pulverizing Process (S500)

The pulverizing process (S500) is a process of pulverizing the waste battery dry-processed through the roasting process (S400). For example, in the pulverizing process (S500), the reduction-fired battery may be classified through a ball mill so that the reduction-fired battery having a size of 200 mesh or less is 80% or more.

The pulverizing process (S500) may be performed while spraying water under a nitrogen (N₂) atmosphere to prevent sparks and explosions. After the pulverizing process, the sprayed water and the electrolyte flowing out from the waste battery may be removed. For example, water and electrolyte can be removed by centrifugation using a rotary barrel.

In the waste battery processing method according to the present disclosure, an additional process of separating a black mass after shredding and pulverizing the battery cell units is omitted. According to the present disclosure, since metals are recovered through the hydrometallurgical process without going through a process of separating a black mass, it is possible to minimize the loss rate of metal components present in the pack-type battery.

The discharging process (S100), the dismantling process (S200), the shredding process (S300), the roasting process (S400), and the pulverizing process (S500) according to the present disclosure can be performed continuously by an automated facility. Therefore, it is possible to implement an integrated recycling process technique from a pack-type waste battery to final target metal compounds, which makes it possible to significantly reduce and the time required to recover metals from a waste battery.

### Hydrometallurgical process (S600)

The hydrometallurgical process (S600) is a process for recovering metals using the pulverized battery. The metals recovered through the hydrometallurgical process (S600) may be in the form of compounds. For example, the hydrometallurgical process (S600) can recover metals in a compound form from the pulverized battery after the pulverizing process (S500).

The metal compounds recovered through the hydrometallurgical process (S600) may include at least one selected from the group consisting of lithium hydroxide, lithium carbonate and lithium phosphate. Through the hydrometallurgical process (S600) of the present disclosure, it is possible to produce high-purity lithium carbonate (Li₂CO₃) and high-purity lithium hydroxide (LiOH·H₂O) which show an excellent lithium recovery rate. As will be described later, lithium hydroxide may be produced through a pre-separation process (S610), a weak acid leaching process (S612), a post-separation process (S614), a lithium phosphate production process (S616), a lithium sulfate solution production process (S618), a lithium carbonate production process (S620), a lithium hydroxide solution production process (S622), and an ion exchange resin process (S624).

Additionally, the metal compounds recovered through the hydrometallurgical process (S600) may include copper(II) sulfide (CuS).

In one embodiment of the present disclosure, the metal compounds recovered through the hydrometallurgical process (S600) may include one type of sulfate containing one metal selected from the group consisting of nickel, cobalt and manganese. In another embodiment of the present disclosure, the metal compounds recovered through the hydrometallurgical process (S600) may include a nickel-cobalt-manganese-based compound in a solution state, for example, a NCM (Ni, Co, Mn) solution.

As will be described later, nickel sulfate may be produced through a pre-separation process (S610), a weak acid leaching process (S612), a post-separation process (S614), a two-stage leaching process (S626), a first solvent extraction process (S628), and a first impurity removal process (S630).

As will be described later, cobalt sulfate may be produced through a pre-separation process (S610), a weak acid leaching process (S612), a post-separation process (S614), a two-stage leaching process (S626), a first solvent extraction process (S628), a second solvent extraction process (S632), and a second impurity removal process (S634).

As will be described later, manganese sulfate may be produced through a pre-separation process (S610), a weak acid leaching process (S612), a post-separation process (S614), a two-stage leaching process (S626), a first solvent extraction process (S628), a second solvent extraction process (S632), and a third impurity removal process (S636).

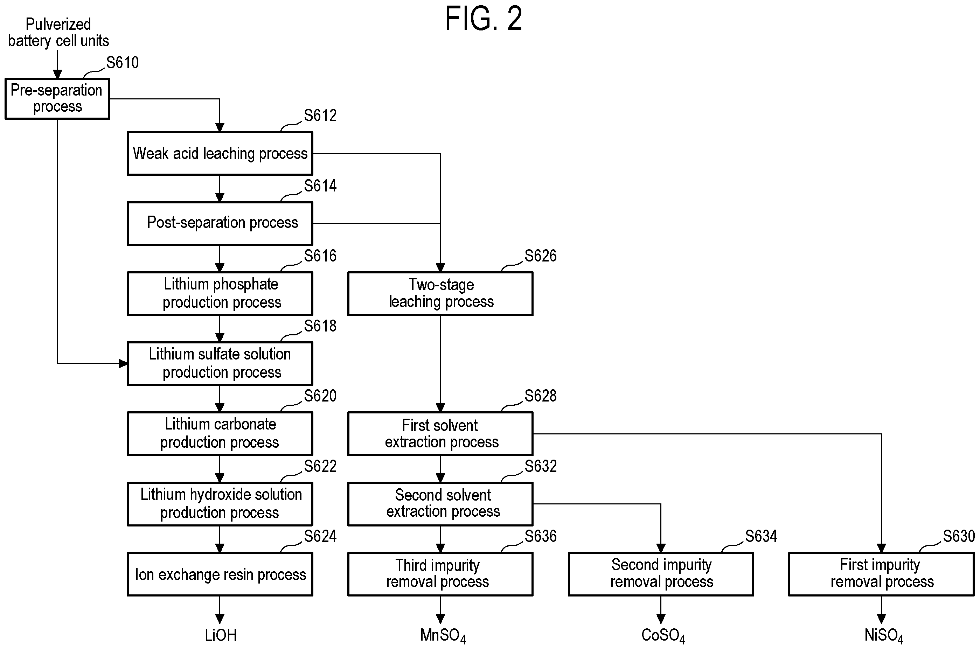

Hereinafter, each step of the hydrometallurgical process (S600) will be described in more detail with reference to FIG. 2. FIG. 2 is a process diagram of the hydrometallurgical process (S600) of the waste battery processing method according to the present disclosure.

### Pre-separation Process (S610)

The pre-separation process (S610) is a process of leaching and separating lithium (Li) by adding water to the fired and pulverized battery. For example, in the pre-separation process (S610), the pulverized battery subjected to the pulverizing process (S500) may be dissolved in water, and a lithium (Li) solution may be leached at 10 °C to 30 °C for 1 to 3 hours to produce a lithium carbonate (Li₂CO₃) solution and separate a cake. Through the pre-separation process (S610), the operating costs and auxiliary material costs in the lithium phosphate production process (S616), which will be described later, can be reduced, the mixing of impurities can be minimized when producing high-purity lithium hydroxide, and the processing costs can be reduced when producing lithium hydroxide.

After the pre-separation process (S610), a first evaporation concentration process (not shown) may be performed. The first evaporation concentration process is a process of producing lithium carbonate (Li₂CO₃) crystals by evaporating and concentrating the lithium (Li) solution (filtrate) generated in the pre-separation process (S610). By producing the lithium carbonate crystals through the pre-separation process (S610) and the first evaporation concentration process, the amount of phosphoric acid (H₃PO₄) and sodium hydroxide (NaOH) used in the lithium phosphate production process (S616), which will be described later, can be reduced by more than 50%, and the loss of lithium (Li) distributed to the filtrate in the lithium phosphate production process (S616) can be significantly reduced.

### Weak Acid Leaching Process (S612)

The weak acid leaching process (S612) is a process in which the cake separated in the pre-separation process (S610) is leached using sulfuric acid (H₂SO₄). Specifically, the weak acid leaching process (S612) is a process in which the cake produced after pre-separating lithium in the pre-separation process (S610) is reduced and leached with sulfuric acid and hydrogen peroxide (H₂O₂) at 80 °C to 85 °C for 1 to 4 hours. By dissolving nickel (Ni), cobalt (Co), and manganese (Mn) from the cake from which lithium (Li) is pre-separated through the pre-separation process (S610), the amount of auxiliary raw materials used is minimized, and stable process management in the continuous processes can be achieved.

### Post-separation Process (S614)

The post-separation process (S614) is a process of neutralizing the leach filtrate generated in the weak acid leaching process (S612) to separate a lithium (Li) solution and a nickel cobalt manganese cake (hereinafter referred to as NCM cake). Specifically, in the post-separation process (S614), the leaching filtrate obtained in the weak acid leaching process (S612) is neutralized (to pH 10 to pH 12) with sodium hydroxide (NaOH) and reacted at 70 °C to 85 °C for 4 to 8 hours, so that nickel (Ni), cobalt (Co) and manganese (Mn) can be recovered by precipitation, and lithium (Li) can be separated by distributing it as a filtrate. In the post-separation process (S614), the precipitation rate of nickel (Ni), cobalt (Co) and manganese (Mn) may be 99.9% or more.

Additionally, in the post-separation process (S614), the filtered NCM cake may be repulped two or more times to remove residual sodium salt (Na Salt). For example, sodium (Na) content in the NCM cake can be removed by 3.43% to 0.4%. In this specification, the repulping process refers to a process of repulping a solid cake with water to wash the filtrate components (for example, residual sodium salt) present in the cake.

### Lithium Phosphate Production Process (S616)

The lithium phosphate production process (S616) is a process of generating a lithium phosphate (Li₃PO₄) cake by adding phosphoric acid (H₃PO₄) and sodium hydroxide (NaOH) to the lithium (Li) solution separated in the post-separation process (S614). Specifically, phosphoric acid (H₃PO₄) may be added to the lithium (Li) solution separated in the post-separation process (S614) and reacted at 70 °C to 85 °C for 1 to 4 hours to precipitate and recover lithium (Li) in the form of lithium phosphate (Li₃PO₄). In addition, sodium hydroxide (NaOH) may be added to neutralize the lithium (Li) solution to pH 10.0 to pH 12.0.

### Lithium Sulfate Solution Production Process (S618)

The lithium sulfate solution production process (S618) is a process in which a lithium sulfate (Li₂SO₄) solution is produced by dissolving the lithium carbonate (Li₂CO₃) crystals recovered by evaporating and concentrating the solution (lithium carbonate (Li₂CO₃) solution) produced in the pre-separation process (S610), and the lithium phosphate (Li₃PO₄) cake produced in the lithium phosphate production process (S616), with sulfuric acid. For example, in the lithium sulfate solution production process (S618), the temperature is 60 °C to 80 °C, the reaction time is 0.5 to 3 hours, and the pH is 2.0 or less.

After the lithium sulfate solution production process (S618), a second evaporation concentration process (not shown) may be performed. The second evaporation concentration process is a process of evaporating and concentrating the lithium sulfate solution produced in the lithium sulfate solution production process (S618) to separate lithium sulfate (Li₂SO₄) crystals and phosphoric acid (H₃PO₄) filtrate. The phosphoric acid (H₃PO₄) filtrate may be recycled in the lithium phosphate production process (S616) and used as a lithium precipitation auxiliary material. The evaporation condensate generated in the second evaporation concentration process may be recycled as a process solution in the lithium (Li) pre-separation process (S610). Thus, it is possible to reduce the amount of waste water discharged to the outside of the system and the amount of fresh water introduced into the system.

A first phosphorus removal process (not shown) is a process in which the lithium sulfate (Li₂SO₄) crystals produced in the second evaporation concentration process are dissolved in pure water and then phosphorus (P) is removed by using aluminum sulfate (Al₂(SO₄)₃) and caustic soda (NaOH). For example, aluminum sulfate (Al₂(SO₄)₃) may be added to the solution produced in the lithium sulfate solution production process (S618) to adjust the pH to 5.0 to 6.0 and reaction may be performed at 50 °C to 70 °C for 4 to 8 hours. By doing so, most phosphorus (P) can be removed by precipitation, and iron (Fe) and other impurities can also be coprecipitated.

### Lithium Carbonate Production Process (S620)

The lithium carbonate production process (S620) is a process of precipitating lithium carbonate (Li₂CO₃) by adding sodium carbonate (Na₂CO₃) to the lithium sulfate (Li₂SO₄) produced in the lithium sulfate solution production process (S618). For example, in the lithium carbonate production process (S620), sodium carbonate (Na₂CO₃) may be added to the filtrate produced in the first phosphorus removal process, and reaction may be performed at 80 °C to 85 °C for 1 to 6 hours to precipitate lithium carbonate.

Preferably, a repulping process may be performed to remove residual sodium (Na) salt in the cake remaining in the lithium carbonate production process (S620). In this case, repulping may be performed at 80 °C to minimize the loss of lithium (Li). The filtrate obtained in the lithium carbonate production process (S620) may be recycled in the lithium phosphate production process (S616).

### Lithium Hydroxide Solution Production Process (S622)

The lithium hydroxide solution production process (S622) is a process in which a lithium hydroxide (LiOH) solution is produced by dissolving the lithium carbonate cake produced in the lithium carbonate production process in pure water and then adding calcium oxide (CaO). For example, calcium oxide (CaO) and water may be added to the lithium carbonate cake produced in the lithium carbonate production process (S620), and reaction may be performed at 80 °C to 100 °C for 3 hours or less, and then at 80 °C to 100 °C for 2 hours or less to produce a lithium hydroxide (LiOH) solution. Preferably, a repulping process may be performed to recover lithium contained in the calcium carbonate (CaCO₃) residue produced in the lithium hydroxide solution production process (S622).

### Ion Exchange Resin Process (S624)

The ion exchange resin process (S624) is a process of removing calcium (Ca) and magnesium (Mg), which are impurities contained in the lithium hydroxide (LiOH) solution produced as above.

A third evaporation concentration process (not shown) is a process in which lithium hydroxide (LiOH) crystals are produced by evaporating and concentrating the lithium hydroxide (LiOH) solution produced in the lithium hydroxide solution production process (S622) and/or the ion exchange resin treatment solution from which impurities are removed through the ion exchange resin process (S624). Specifically, in the third evaporation concentration process, a LiOH·H₂O product can be produced by evaporating and concentrating the lithium hydroxide (LiOH) solution and/or the ion exchange resin treatment solution.

### Two-stage Leaching Process (S626)

The two-stage leaching process (S626) is a process in which the weak acid leaching process cake produced in the weak acid leaching process (S612) and the NCM cake produced in the post-separation process (S614) are leached using sulfuric acid and hydrogen peroxide (H₂O₂). For example, in the two-stage leaching process (S626), the weak acid leaching process cake and the NCM cake from which lithium is separated may be dissolved (to pH 1.5 to 2.5) with sulfuric acid (H₂SO₄) at 60 °C to 80 °C for 2 to 4 hours. In order to improve the dissolution rate of the NCM cake, a small amount of reducing agent may be added. In this case, hydrogen peroxide (H₂O₂) may be used as the reducing agent.

Preferably, an impurity removal process may be performed to remove impurities from the filtrate produced in the two-stage leaching process (S626). In this case, the impurity removal process may include a first copper removal process and a first aluminum & phosphorus removal process. The first copper removal process (not shown) is a process of adding NaSH to remove copper (Cu) as an impurity from the filtrate produced in the two-stage leaching process (S626). The first aluminum & phosphorus removal process (not shown) is a process of adding caustic soda (NaOH) and oxygen gas (O₂) to remove additional impurities, aluminum (Al) and phosphorus (P), from the filtrate produced in the first copper removal process.

### First Solvent Extraction Process (S628)

The first solvent extraction process (S628) is a process of extracting cobalt by an extractant from the filtrate produced in the two-stage leaching process (S626) and/or the filtrate produced in the above-described impurity removal process.

Preferably, a nickel hydroxide production process and a nickel weak acid leaching process may be performed on the filtrate produced in the first solvent extraction process (S628). For example, the nickel hydroxide production process (not shown) may be a process of producing nickel hydroxide (Ni(OH)₂) by adding caustic soda (NaOH) to the filtrate produced in the first solvent extraction process (S628). The nickel weak acid leaching process (not shown) may be a process in which water, sulfuric acid (H₂SO₄), and hydrogen peroxide (H₂O₂) are added to the cake produced in the nickel hydroxide production process to dissolve the cake.

### First Impurity Removal Process (S630)

The first impurity removal process (S630) is a process of removing impurities from the filtrate produced in the first solvent extraction process (S628) and/or the filtrates produced in the nickel hydroxide production process and the nickel weak acid leaching process. Specifically, the first impurity removal process (S630) may include a second copper removal process and a first aluminum removal process. For example, the second copper removal process may be a process of adding sodium hydrogen sulfide (NaSH) to remove copper (Cu) as an impurity from the filtrate produced in the nickel weak acid leaching process. The first aluminum removal process is a process of adding caustic soda (NaOH) and oxygen gas (O₂) to the filtrate produced in the second copper removal process to remove aluminum (Al) as an additional impurity.

A fourth evaporation concentration process (not shown) is a process of producing nickel sulfate (NiSO₄) crystals by evaporating and concentrating the solution produced in the first impurity removal process (S630).

### Second Solvent Extraction Process (S632)

The second solvent extraction process (S632) is a process of extracting manganese by an extractant from the stripping liquid produced in the first solvent extraction process (S628).

Preferably, a first cobalt extraction process (not shown) may be performed on the filtrate produced in the second solvent extraction process (S632). The first cobalt extraction process is a process of extracting cobalt by an extractant from the filtrate produced in the second solvent extraction process (S632).

### Second Impurity Removal Process (S634)

The second impurity removal process (S634) is a process of removing impurities from the filtrate produced in the second solvent extraction process (S632) and/or the filtrate produced in the first cobalt extraction process. Specifically, the second impurity removal process (S634) may include a third copper removal process (not shown) and a second aluminum removal process (not shown). For example, the third copper removal process is a process of adding sodium hydrogen sulfide (NaSH) to remove copper (Cu) as an impurity from the stripping liquid produced in the first cobalt extraction process. The second aluminum removal process is a process of adding caustic soda (NaOH) and oxygen gas (O₂) to remove aluminum (Al) as an additional impurity from the filtrate produced in the third copper removal process.

A fifth evaporation concentration process (not shown) is a process of producing cobalt sulfate (CoSO₄) crystals by evaporating and concentrating the filtrate generated in the second impurity removal process (S634).

### Third Impurity Removal Process (S636)

The third impurity removal process (S636) is a process of removing impurities from the stripping liquid produced in the second solvent extraction process (S632). Specifically, the third impurity removal process (S636) may include a fourth copper removal process (not shown) and a third aluminum removal process (not shown). The fourth copper removal process is a process of adding sodium hydrogen sulfide (NaSH) to remove copper (Cu) from the stripping liquid produced in the second solvent extraction process (S632). The third aluminum removal process is a process of adding caustic soda (NaOH) and oxygen gas (O₂) to remove aluminum (Al) an additional impurity from the filtrate produced in the fourth copper removal process.

A sixth evaporation concentration process (not shown) is a process of producing manganese sulfate (MnSO₄) crystals by evaporating and concentrating the filtrate produced in the third impurity removal process (S636).

Hereinafter, the present invention will be described in detail through the comparison of an example and a comparative example. In the example, valuable metals were recovered from a waste battery through the above-described processes. Meanwhile, in the comparative example, valuable metals were recovered in the same manner as in the example, except that in the dismantling process (S200), a pack-type waste battery was dismantled into battery module units.

The introduction amounts of impurities in the materials recovered in the example and the comparative example are shown in Table 1 below. The introduction amount of impurities is calculated by the following method. Specifically, the amount of NCM622 waste batteries processed per day was 285.7 tons based on packs, 205.5 tons based on modules excluding other parts after dismantling the packs, and 168.2 tons based on cells excluding other parts after dismantling the modules. At this time, the introduction amounts of impurities were calculated by deriving the ratio of aluminum (Al) and iron (Fe) among the materials recovered from waste battery modules.

**[Table 1]**

| | | Comparative Example | Example |
|---|---|---|---|
| | | Dismantled into module units | Dismantled into cell units |
| Al | Component ratio (%) | 12.20 | 2.63 |
| | Introduction amount (ton/day) | 25.10 | 4.42 |
| Fe | Component ratio (%) | 3.00 | 0.00 |
| | Introduction amount (ton/day) | 6.17 | 0.00 |

As shown in Table 1, it can be seen that in the example in which the waste battery packs are dismantled into battery cell units, the introduction amount of aluminum (Al) and iron (Fe) is significantly reduced as compared with the comparative example. Specifically, the introduction amount of aluminum (Al) in the example was reduced by 82.4%, and the introduction amount of iron (Fe) was reduced by 100%, as compared with the comparative example.

Meanwhile, the recovery rates of individual valuable metals among the materials recovered in the example and the comparative example are shown in Table 2 below. The recovery rates of individual valuable metals refer to values calculated by excluding losses in the process of recovering target metals (e.g., Li) in commercial forms (e.g., LiOH). At this time, the weights of the raw materials (and slag) containing the target metals were measured using a scale, and the concentrations of the leached metals in the form of compounds were measured using ICP-AES spectroscopic analysis, from which the recovery rates of individual metals were calculated.

**[Table 2]**

| | Comparative Example | | Example | |
|---|---|---|---|---|
| | Dismantled into module units | | Dismantled into cell units | |
| Recovery rate (%) | Li | 88.4 | Li | 98.3 |
| | Ni | 96.5 | Ni | 95.1 |
| | Co | 96.5 | Co | 94.7 |
| | Mn | - | Mn | 95.1 |
| | Cu | 97.9 | Cu | 99.9 |

As shown in Table 2, it can be seen that the lithium (Li) recovery rate in the example was significantly increased as compared with the comparative example. In addition, it can be noted that in the example, unlike the comparative example, the recovery of manganese (Mn) is possible.

While certain embodiments have been described, these embodiments have been presented by way of example only, and are not intended to limit the scope of the disclosures. Indeed, the embodiments described herein may be embodied in a variety of other forms. Furthermore, various omissions, substitutions and changes in the form of the embodiments described herein may be made without departing from the spirit of the disclosures. The accompanying claims and their equivalents are intended to cover such forms or modifications as would fall within the scope and spirit of the disclosures.

## Claims

1. A waste battery processing method, comprising:
a discharging process of discharging a waste battery;
a dismantling process of dismantling the discharged waste battery into battery cell units;
a shredding process of shredding the dismantled waste battery;
a roasting process of roasting the shredded waste battery;
a pulverizing process of pulverizing the fired waste battery; and
a hydrometallurgical process of extracting and recovering metals from the pulverized waste battery.

2. The method of Claim 1, wherein the waste battery is a pack-type battery that has reached the end of its life.

3. The method of Claim 1, wherein the waste battery is discharged through the discharging process so that the voltage of the waste battery becomes 30 V or less.

4. The method of Claim 1, wherein the battery cell units are shredded into a size of 20 cm or less through the shredding process.

5. The method of Claim 1, wherein a process of separating a black mass from the pulverized waste battery is omitted.

6. The method of Claim 1, wherein the discharging process, the dismantling process, the shredding process, the roasting process, and the pulverizing process are performed continuously by an automated facility.

7. The method of Claim 1, wherein the discharging process, the dismantling process, and the shredding process are performed by an automated facility using a robot.

8. The method of Claim 1, wherein metal compounds are recovered through the hydrometallurgical process.

9. The method of Claim 8, wherein the metal compounds include at least one selected from the group consisting of lithium hydroxide, lithium carbonate and lithium phosphate.

10. The method of Claim 8, wherein the metal compounds include one type of sulfate containing one selected from the group consisting of nickel cobalt, and manganese.

11. The method of Claim 8, wherein the metal compounds include a nickel-cobalt-manganese-based compound in a solution state.
